(19) Europäisches Patentamt

European Patent Office

Office européen des brevets

(11) Veröffentlichungsnummer : **0 083 715**
**B1**

(12) **EUROPÄISCHE PATENTSCHRIFT**

(45) Veröffentlichungstag der Patentschrift :
30.07.86

(21) Anmeldenummer : **82110787.7**

(22) Anmeldetag : **23.11.82**

(51) Int. Cl.⁴ : **B 29 C 43/18**, B 29 C 67/20

(54) **Verfahren und Vorrichtung zum Herstellen von Filterplatten oder dergleichen.**

(30) Priorität : **15.12.81 DE 3149701**

(43) Veröffentlichungstag der Anmeldung :
**20.07.83 Patentblatt 83/29**

(45) Bekanntmachung des Hinweises auf die Patenterteilung : **30.07.86 Patentblatt 86/31**

(84) Benannte Vertragsstaaten :
**AT BE CH DE FR GB IT LI**

(56) Entgegenhaltungen :
**DE-A- 1 504 173
DE-A- 2 136 444
DE-A- 2 921 367
DE-A- 3 001 172
DE-B- 2 709 450
DE-B- 2 932 380
DE-C-   637 636
DE-C-   859 141
GB-A- 1 140 850
MODERN PLASTICS INTERNATIONAL, Band 9, Nr.
11, November 1979, Lausanne "EPS gets a big boost
from new equipment, new materials", Seiten 12-15**

(73) Patentinhaber : **Klinkau & Co. GmbH
Raiffeisenstrasse 6
D-8952 Marktoberdorf-Leuterschach (DE)**

(72) Erfinder : **Der Erfinder hat auf seine Nennung verzichtet**

(74) Vertreter : **Goddar, Heinz J., Dr. et al
FORRESTER & BOEHMERT Widenmayerstrasse 4/I
D-8000 München 22 (DE)**

**Beschreibung**

Die Erfindung betrifft ein Verfahren zum Herstellen von Filterplatten nach dem Oberbegriff des Patentanspruches 1 sowie eine Vorrichtung zum Herstellen von Filterplatten, insbesondere zu dessen Durchführung, nach dem Oberbegriff des Patentanspruches 2.

Filterplatten der vorstehend erwähnten Art, die batterieweise zu Filterpressen kombinierbar sind, werden in der Regel aus thermoplastischem Material hergestellt. Dabei wird bislang so vorgegangen, daß eine Hochleistungspresse eingesetzt wird, deren Unter- und Obertisch jeweils als sowohl beheiz- als auch kühlbares Unter- und Oberteil der Preßform ausgebildet sind, wobei zusätzlich noch Einrichtungen zum Beheizen der Schmalseiten der herzustellenden Filterplatte während des Abkühlvorganges vorgesehen sind. Der Formhohlraum wird dabei im wesentlichen vollständig mit Kunststoffgranulat, wie Polypropylen oder dergleichen, gefüllt. Bei dieser Vorgehensweise ist es notwendig, während des Heiz-, insbesondere aber auch während des Kühlvorganges ganz erhebliche Drücke auf das Kunststoffmaterial auszuüben, mit hierdurch bedingtem konstruktiven Aufwand für die verwendbaren Pressen, da ansonsten ein Verwerfen der herzustellenden Filterplatten oder dergleichen bzw. das Entstehen von Unebenheiten oder Blasen nicht verhindert werden können. Derartige Formpressen sind nicht nur kostspielig in der Herstellung, vielmehr sind die bekannten Verfahren auch sehr energieaufwendig, bedingt dadurch, daß beträchtliche Massen aufgeheizt und abgekühlt werden müssen, wobei das erforderliche Gegenheizen während des Kühlvorganges noch einen zusätzlichen Energieverlust bedingt. Außerdem müssen die in Unter- und Obertisch der verwendeten Pressen vorhandenen Fließmittelkanäle so ausgelegt werden, daß sie sowohl zum Hindurchleiten von Heizmedium als auch von Kühlmedium geeignet sind, mit auch hieraus resultierendem erheblichen konstruktiven Aufwand.

Aus der DE-A-31 38 857 ist bereits ein Verfahren der vorstehend beschriebenen Art bekannt, bei dem der Preßformrahmen heizbar ist, damit in der weiter oben bereits beschriebenen Weise während des Abkühlvorganges durch entsprechendes Gegenheizen im Preßformrahmenbereich ein vorzeitiges, allzu rasches Abkühlen bzw. Erstarren des Dichtrandes verhindert wird. Diese Vorgehensweise hat nicht nur den Nachteil, daß während des Kühlvorganges ein erheblicher Energieverlust infolge des notwendigen Gegenheizens des Preßformrahmens auftritt, sondern auch denjenigen, daß eine Entlüftung des Dichtrandbereiches während des Schmelzvorganges nur schwierig mittels zusätzlicher Maßnahmen bewerkstelligt werden kann.

Ferner ist aus der DE-A-30 01 172 eine Vorrichtung der eingangs genannten Art bekannt, bei der der Preßformrahmen an seiner Außenseite mit einer wärmeisolierenden Schicht versehen ist, um so einen übermäßigen Wärmeverlust im Randbereich der damit herstellbaren Platte zu vermeiden. Der auf diese Weise begrenzbare Wärmeverlust im Randbereich ist aber immer noch verhältnismäßig groß, da ja auf jeden Fall das massive Material des eigentlichen Preßformrahmens noch von der herzustellenden Platte her aufgeheizt werden muß, ehe die isolierende Wirkung der außen angebrachten Wärmeisolierung zum Tragen kommt. Außerdem bedingt das Eingreifen des Form-Oberteiles in den Preßformrahmen zusätzliche Entlüftungsmaßnahmen im Randbereich, wobei diese zu besonderen Problemen führen würden, wenn die vorstehend beschriebene Vorrichtung zum Herstellen von Filterplatten unter Verwendung eines in den Preßformrahmen eingelegten Kernrahmens verwendet würde.

Der Erfindung liegt daher die Aufgabe zugrunde, das bekannte Verfahren und die bekannte Vorrichtung dahingehend weiterzubilden, daß mit erheblich verringertem Energieaufwand sowie mit erhöhter Durchsatzleistung Filterplatten mit verbesserter Qualität hergestellt werden können, wobei insbesondere aufwendige Gegenheizmaßnahmen im Randbereich vermieden und in diesem die Entlüftungsmöglichkeiten verbessert werden sollen.

Erfindungsgemäß wird diese Aufgabe bei einem Verfahren der eingangs genannten Art durch das im Kennzeichen des Patentanspruches 1 aufgeführte Merkmal gelöst. Die erfindungsgemäß vorgeschlagene Vorrichtung zeichnet sich durch das Merkmal des Kennzeichens des Patentanspruches 2 aus. Eine besonders bevorzugte Ausführungsform der Vorrichtung nach der Erfindung ist Gegenstand des Patentanspruches 3.

Für die Erfindung ist es charakteristisch, daß der Schmelz- und Kühlvorgang dadurch wesentlich vereinfacht und energiegünstiger gestaltet wird, daß in der beanspruchten und weiter unten noch im einzelnen erläuterten Weise bei Verwendung vorgefertigter Kerne auf die bislang als unumgänglich betrachtete Randheizung während des Kühlvorganges verzichtet wird. Ober- und Unterteil der erfindungsgemäß verwendeten Formteile, die aus einer besonders harten Aluminiumlegierung gegossen werden und ihre endgültige Form durch abschließende spanabhebende Bearbeitung erhalten, sind jeweils einstückig ausgebildet und verfügen infolgedessen im Zusammenwirken mit den Materialeigenschaften über eine ausgezeichnete Wärmeleitfähigkeit, die beim Zusammensetzung von Formteilen aus Einzelteilen wegen der dabei unvermeidbaren Zwischennuten etc. nicht erreicht werden kann. Ebenfalls wird ein Unterkriechen des Kunststoffes mit Sicherheit vermieden. Die erfindungsgemäß anzuwendenden Drücke sind wesentlich geringer als bei dem bekannten Verfahren, und zwar sowohl beim Heizvorgang als auch beim Kühlvorgang, da dem Material unter Konstanthaltung des regelbaren Druckes lediglich « gefolgt » wird, also kein gewaltsames Zusammendrücken des Kunststoffmaterials erfolgt. Die Formteile sind dabei so ausgebildet, daß sie durch hierfür vorgesehene Führungszapfen etc. selbstjustierend wirken, wodurch sich wiederum beträchtliche Arbeitsersparnisse ergeben.

Nachstehend sind Ausführungsbeispiele der Erfindung anhand der schematischen Zeichnung im einzelnen erläutert. Dabei zeigt :

Figur 1 ein erstes Ausführungsbeispiel einer Vorrichtung nach der Erfindung in der Vorderansicht ;

Figur 2 die Vorrichtung von Fig. 1 in der Seitenansicht ;

Figur 3 ein Detail der Formentransporteinrichtung der Vorrichtung von Fig. 1 und 2 im vertikalen Schnitt senkrecht zur Zeichenebene von Fig. 2 ;

Figur 4 in zu Fig. 3 analoger Darstellung das dort gezeigte Detail bei einem abgewandelten Ausführungsbeispiel ;

Figur 5 in zu Fig. 3 analoger Darstellung das dort gezeigte Detail bei einem wiederum abgewandelten Ausführungsbeispiel ;

Figur 6 eine erfindungsgemäß verwendete Form im gefüllten Zustand vor Beginn des Formpreßvorganges im vertikalen Schnitt ;

Figur 7 die Form von Fig. 6 im Schnitt entlang der Linie VII-VII von Fig. 6 ;

Figur 8 eine zu Fig. 6 analoge Schnittdarstellung bei Beendigung des Aufschmelzvorganges ; und

Figur 9 den Randbereich der in Fig. 8 gezeigten Form bei Beendigung des Aufschmelzvorganges in Detaildarstellung

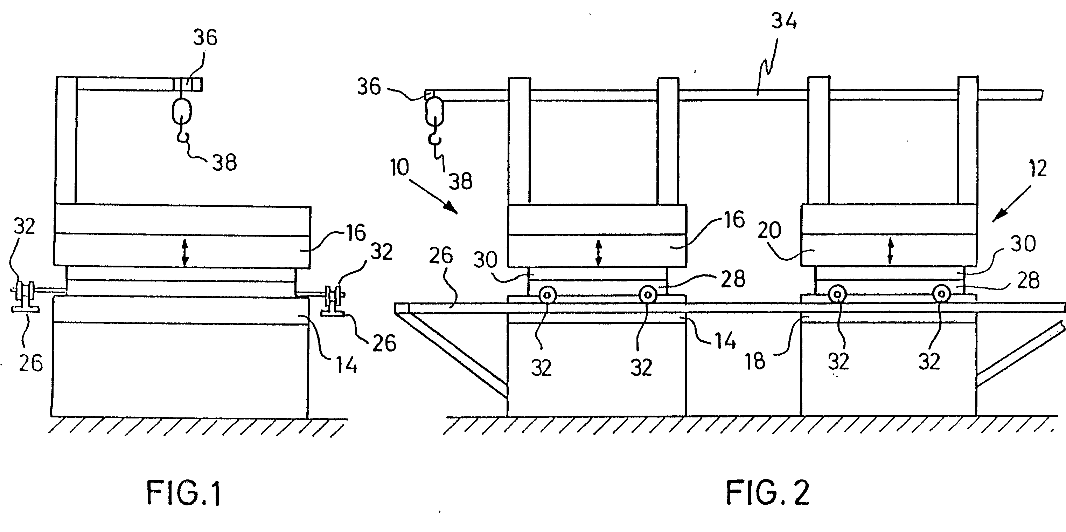

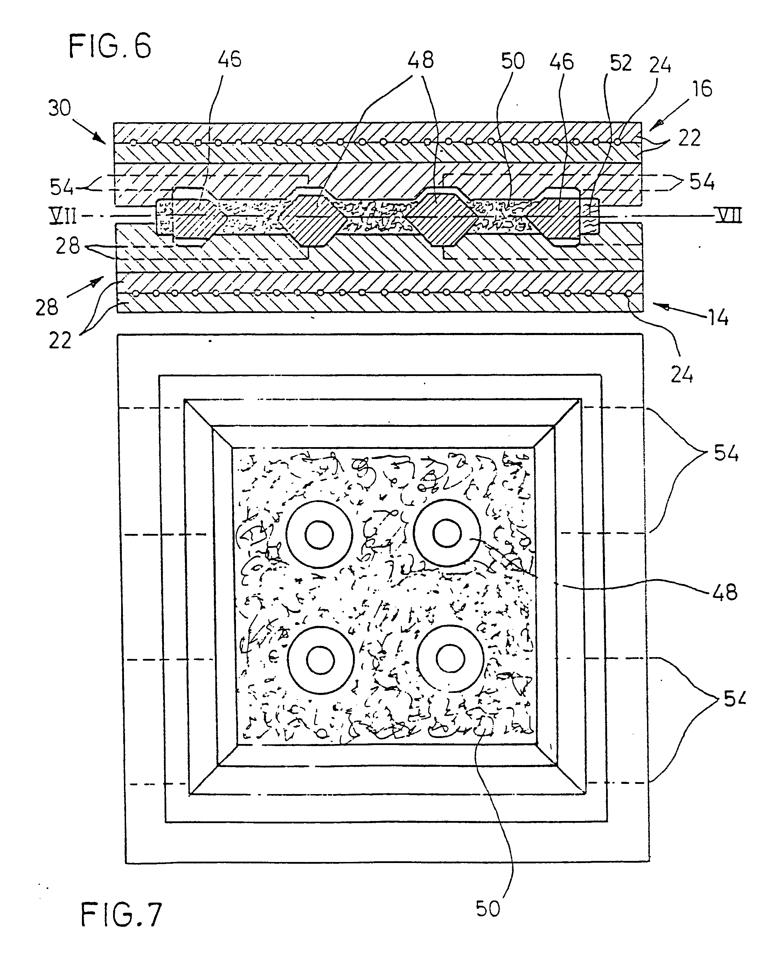

Wie Fig. 1 und 2 erkennen lassen, weist die bei dem erfindungsgemäßen Verfahren verwendbare Vorrichtung nach der Erfindung bei dem dort gezeigten Ausführungsbeispiel eine Heizpresse 10 sowie eine Kühlpresse 12 auf, deren Unter- und Obertische 14, 16 bzw. 18, 20 jeweils beheizbar bzw. kühlbar sind. Der Untertisch 14 sowie der Obertisch 16 der Heizpresse 10 sind dabei jeweils, wie Fig. 6 zeigt, in zwei Tischteile 22 unterteilt, in deren Trennebene Kanäle 24 gebildet sind, in denen elektrische Heizpatronen liegen, die in geregelter Weise mit Heizstrom beaufschlagbar sind. Die Obertische der Pressen 10, 12 sind, wie dies in Fig. 1 und 2 durch die Pfeile angedeutet sind, vertikal beweglich und insbesondere mit regelbarem Druck in Richtung auf die Untertische 14, 18 bewegbar. Über die gesamte Länge der Pressen 10, 12 erstreckt sich beidseits jeweils eine Schiene 26, wobei die Schienen an der in Fig. 2 links gezeigten Seite der Heizpresse 10 sowie an der in Fig. 2 rechts gezeigten Seite der Kühlpresse 12 soweit vorstehen, daß dort jeweils außerhalb des Bereiches der Pressentische 14, 16, 18, 20 eine aus Unterteil 28 und Oberteil 30 bestehende Form, die sich mittels beidseits der Form paarweise vorgesehener Laufrollen 32 auf den Schienen abstützt, angeordnet werden kann. Oberhalb der beiden Pressen 10, 12 ist entlang einer Bahn 34 ein Kranschlitten 36 eines Laufkranes bewegbar, mittels dessen Hubeinrichtung 38 Formen 28, 30 oberhalb der Pressen 10, 12 von einem zum anderen Ende transportierbar sind.

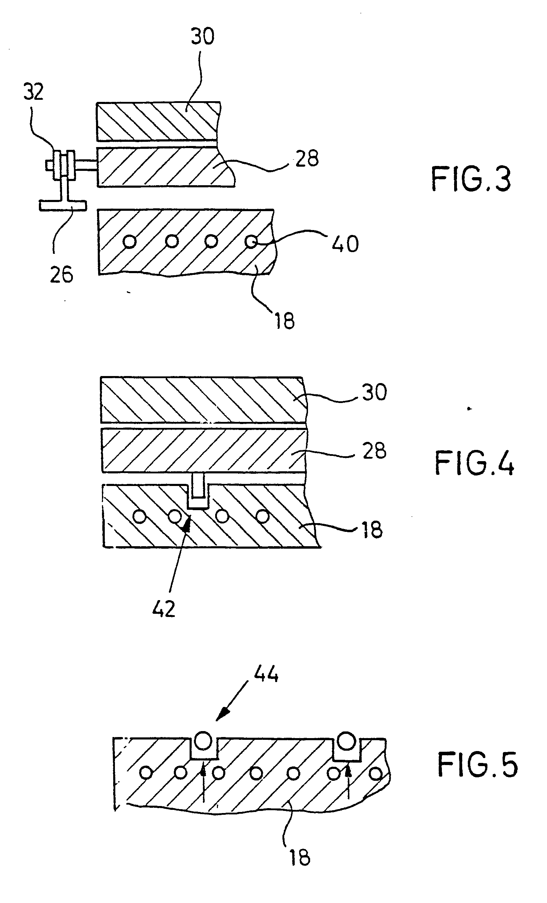

Statt der Kombination aus Schiene 26 und Laufrollen 12, die in Fig. 3 nochmals in größerem Detail gezeigt ist, kann die sich über die Gesamtlänge der Pressenkombination und in der aus Fig. 2 ersichtlichen Weise in deren Bedienungszonen hinaus erstreckende Stützbahn für die Formen 28, 30 (in Fig. 3 ist ebenso wie in Fig. 4 und 5 die Form 28, 30 jeweils im Bereich der Kühlpresse 12 gezeigt, wobei erkennbar ist, daß der Untertisch 18 der Kühlpresse 12, wie im übrigen auch der Obertisch 20, Kühlkanäle 40 für hindurch zu leitendes Kühlfließmittel, insbesondere Kühlwasser, aufweist) in der aus Fig. 4 ersichtlichen Weise auch aus hebbaren Rollenschienen 42 bestehen, die innerhalb des Kühlpressen-Untertisches 18 und natürlich in analoger Weise auch innerhalb des Heizpressen-Untertisches 14 vorgesehen sind. Fig. 5 zeigt in Abwandlung dieses Ausführungsbeispieles hebbare Kugelbahnen 44, die natürlich ebenfalls wieder in beiden Untertischen 14, 18 vorgesehen sind. Zwischen den Pressen 10, 12 sowie in deren Ein- und Ausgabestationen sind in diesem Fall Anschlußstücke oder Verlängerungsglieder vorgesehen, so daß in geöffneter Pressenstellung eine durchgehende Stützbahn für die Formen 28, 30 gewährleistet ist. Der Transport der Formen auf der Stützbahn kann sowohl manuell als auch beispielsweise über Mitnahmekette unter Zuhilfenahme von Kolbenzylindereinheiten oder dergleichen erfolgen.

Wie Fig. 6 erkennen läßt, sind dort in die Formen 28, 30 an den Stellen, an denen Materialverdickungen hergestellt werden sollen, nämlich im Bereich des Dichtrandes der herzustellenden Filterplatte sowie dort, wo Stütznocken gebildet werden sollen, ein entsprechend der herzustellenden Außenkontur vorgefertigter Kernrahmen 46 sowie Stützkerne 48 aus massivem Kunststoffmaterial eingelegt, während der Rest des Formhohlraumes mit Kunststoffgranulat 50 angefüllt ist. Die Gesamtmenge des eingefüllten Kunststoffmaterials ist dabei natürlich so bemessen, daß sich nach Fertigstellung der Filterplatte die gewünschten Dimensionen ergeben. Weiterhin zeigt Fig. 6 einen das Kunststoffmaterial umgebenden Randstreifen 52 aus thermisch isolierendem, unter dem Pressendruck kompressiblen Material, nämlich aus Silikonkautschuk. Entlüftungskanäle 54 führen in den Formteilen 28, 30, die aus Aluminium, also aus thermisch gut leitfähigem Material hergestellt sind, von den Stellen, an denen Material für Verdickungen vorgesehen sind, zu den Schmalseiten der Form.

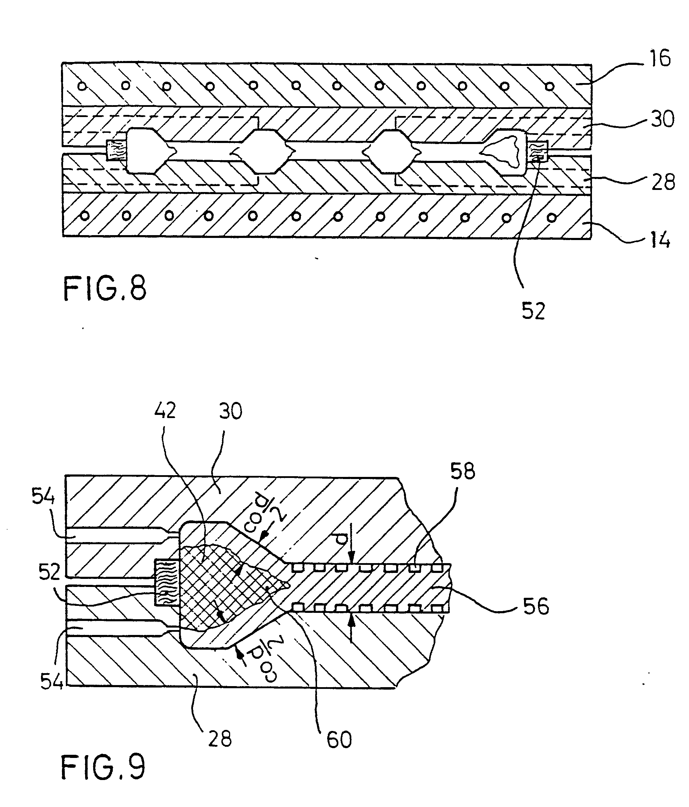

Fig. 8 zeigt die Form von Fig. 6 nach Beendigung des Aufschmelzvorganges, wobei also die unter konstanter Druckbeaufschlagung, die verhältnismäßig gering ist, aufeinanderzu bewegten Formteile 28, 30 praktisch aneinander anliegen und der dichtende, kompressible Randstreifen 52 aus Silikonkautschuk weitestgehend zusammengedrückt worden ist. Die Detaildarstellung von Fig. 9 läßt erkennen, daß in diesem Zustand die Schmelze 56 innerhalb der Form 28, 30 den im wesentlichen ebenen Zentralbereich, in dem Distanznocken 58 zum Anlegen des Filtertuches in bekannter Weise ausgebildet werden, ausfüllt und außerdem der im Randbereich eingelegte Kernrahmen 46 von der Oberfläche her angeschmolzen ist, wobei die Dicke der Schmelze (d) dort mit Ausnahme der dem Randstreifen 52 zugewandten Seite in der Umgebung des Kernrahmens 46 jeweils etwa die Hälfte der Dicke des Zentralbereiches der herzustellenden Filterplatte ausmacht.

Die vorstehend beschriebene erfindungsgemäße Vorrichtung arbeitet wie folgt :

Zunächst wird eine Form 28, 30 unter Einsetzen des Randstreifens 52 mit Kernrahmen und Stützkernen soweit gefüllt, wie dies in Fig. 6 gezeigt ist. Die Form, welche mit geeigneten, an Ober- und Unterteil vorgesehenen Führungseinrichtungen in Form von Zapfen, Bohrungen und dergleichen versehen ist, die in der Zeichnung nicht gezeigt sind, wird in diesem Zustand in Fig. 2 links gesehen auf die Schiene 26 aufgesetzt, wobei also die Laufrollen 32 auf den Schienen 26 aufsitzen. Dann wird die Form in die geöffnete Heizpresse 10 eingefahren. Daraufhin wird der Untertisch 14 der Heizpresse 10 soweit angehoben, daß die Laufrollen 32 außer Eingriff von der Transportschiene 26 kommen.

Daraufhin wird der Obertisch 16 der Heizpresse 10 heruntergefahren und mit konstantem Druck an dem Oberteil 30 der Form 28, 30 zur Anlage gebracht. Unter konstanter Druckbeaufschlagung und gleichzeitigem Heizen der Heizpresse 10 auf die gewünschte Temperatur erfolgt dann das Aufschmelzen des Kunststoffmaterials 50 unter Anschmelzen des Kernrahmens 46 und der Stützkerne 48, bis der in Fig. 8 bzw. 9 gezeigte Zustand erreicht ist. Die Formteile werden dann miteinander verriegelt. Daraufhin wird die Heizpresse 10 durch Hochfahren des Obertisches 16 geöffnet, der Untertisch 14 wird abgesenkt und die Laufrollen 32 kommen wieder mit den Schienen 26 in Eingriff. Anschließend wird die Form in Fig. 2 über die Schienen 26 nach rechts in die geöffnete Kühlpresse 12 gefördert. Hier schließen sich sinngemäß dieselben Schritte an, wie sie vorstehend unter Bezugnahme auf die Heizpresse 10 erläutert wurden, wobei also die beiden Tische 18, 20 während des Abkühlvorganges unter regelbarem, konstantem Druck an den Formteilen 28, 30 anliegen. Der intensive Kontakt des gut leitfähigen Materials der Formteile 28, 30 gewährleistet sowohl bei der Heizpresse 10 also auch bei der Kühlpresse 12 einen einwandfreien Wärmeübergang auf die Formteile 28, 30, ohne daß diese selbst beheizt oder gekühlt werden müßten. Weiterhin verhindert der Randstreifen 52 aus thermisch isolierendem Material, daß die herzustellende Filterplatte in der Kühlpresse 12 allzu rasch von den Schmalseiten her auskühlt, so daß ohne Verwendung bislang als notwendig betrachteter seitlicher Heizeinrichtungen ein optimal gekühltes blasenfreies und keine Verwerfunden oder Unebenheiten aufweisendes Produkt erzielt werden kann.

Das Anschmelzen des Kernmaterials von den Oberflächen her gewährleistet eine innige Verbindung mit der Granulatschmelze, so daß ein insgesamt homogenes, mechanisch stabiles Erzeugnis erhalten wird. Die Verwendung des Kernmaterials setzt im übrigen die erforderlichen Aufschmelz- und Formzeiten beträchtlich herab, wodurch deutliche Energieeinsparungen gegenüber herkömmlichen Verfahren gegeben sind. Der nicht erschmolzene Bereich 60 der herzustellenden Filterplatte läßt sich im übrigen bei einem Schnitt durch die fertige Platte praktisch nicht mehr feststellen, woraus resultiert, daß in der Tat eine innige Verbindung mit der Granulatschmelze 56 stattfindet.

Es sei noch angemerkt, daß sich die in Fig. 4 gezeigte hebbare Rollenschiene bzw. die in Fig. 5 gezeigte hebbare Rollenbahn insbesondere für großdimensionierte Formen eignet, bei denen die Verwendung einer Schienen-Laufrollenkombination, wie in Fig. 3 gezeigt, gegebenenfalls wegen der erforderlichen Abmessungen Probleme mit sich bringen könnte.

**Patentansprüche**

1. Verfahren zum Herstellen von Filterplatten mit Dichtrand und ebenem Zentralbereich unter Verwendung von thermoplastischem Kunststoffgranulat oder dergleichen durch Formpressen, bei dem in den Hohlraum einer Form, bestehend aus je einem horizontal angeordneten Ober- und Unterteil sowie einem Preßformrahmen, zunächst ein vorgefertigter, beim Aufschmelzen des Granulats von seinen Oberflächen her aufschmelzender Kernrahmen (46) aus massivem thermoplastischen Kunststoff eingelegt, daraufhin der Rest des Formhohlraumes mit Granulat oder dergleichen ausgefüllt, dann unter Druckbeaufschlagung und Schließen der Form ein Schmelzvorgang durchgeführt und schließlich unter Druckbeaufschlagung abgekühlt wird, dadurch gekennzeichnet, daß zur Wärmeisolierung in den Preßformrahmen ein den Kernrahmen (46) umgebender Randstreifen (52) aus thermisch isolierendem kompressiblen Material, wie Holz, Silikon, Kautschuk oder dergleichen, eingelegt wird.

2. Vorrichtung zum Herstellen von Filterplatten mit Dichtrand und ebenem Zentralbereich aus thermoplastischem Kunststoff oder dergleichen, mit einer im wesentlichen horizontal angeordneten zweiteiligen heiz- und kühlbaren Form (28, 30), deren Ober- und Unterteil unter Druckbeaufschlagung in zwei jeweils im wesentlichen ebene obere und untere Pressentische aufweisenden Stapelpressen oder dergleichen mit regelbarem Preßdruck gegeneinander bewegbar sind, wobei die Pressentische (14, 16) der einen Presse (10) lediglich heizbar und die Pressentische (18, 20) der anderen Presse (12) lediglich kühlbar sind und die Form mit Unter- und Oberteil separat von den Pressentischen ausgebildet und nacheinander in die Heizpresse (10) und in die Kühlpresse (12) einsetzbar ist, und einer Transporteinrichtung (34, 36, 38) zum Einbringen der mit Kunststoff-Ausgangsmaterial gefüllten Form (28, 30) in die Heizpresse (10) zum Weitertransport derselben in die Kühlpresse (12) nach Beendigung des Schmelzvorganges und zum Austransport der Form aus der Kühlpresse (12), insbesondere zur Durchführung des Verfahrens nach Anspruch 1, dadurch gekennzeichnet, daß die Formteile (28, 30) eine den herzustellenden Dichtrand der Filterplatte oder dergleichen umgebende Nut zum Einlegen eines Randstreifens (52) aus thermisch isolierendem kompressiblen Material, wie Holz, Silikon, Kautschuk oder dergleichen, aufweisen.

3. Vorrichtung nach Anspruch 2, dadurch gekennzeichnet, daß die Formteile (28, 30) mit Entlüftungskanälen (54) versehen sind, die sich jeweils von Positionen herzustellender Materialverdickungen (46, 48) bis zu den Formteilschmalseiten erstrecken.

## Claims

1. A method of manufacturing filter plates having a sealed edge and a flat central area, using thermoplastic granulate or the like, by compression moulding, in which a prefabricated core frame (46) consisting of solid thermoplastics, which on melting of the granulate melts from its surfaces, is first placed in the cavity of a mould, consisting of a horizontal top part and a horizontal bottom part, and a compression mould frame, whereafter the remainder of the mould cavity is filled with granulate or the like, and then a melting operation is performed with the application of pressure and closure of the mould, and finally cooling is effected with the application of pressure, characterised in that in order to provide thermal insulation an edge strip (52) of thermally insulating compressible material, such as wood, silicone, rubber or the like, which surrounds the core frame (46) is placed in the compression mould frame.

2. Apparatus for the manufacture of filter plates having a sealed edge and a flat central area, consisting of thermoplastics or the like, having a substantially horizontal two-part heatable and coolable mould (28, 30), the top and bottom parts of which are relatively movable, with the application of pressure, in two stack presses or the like having adjustable working pressure, the said presses each having substantially flat top and bottom press beds, the press beds (14, 16) of one press (10) being only heatable and the press beds (18, 20) of the other press (12) being only coolable, and the mould is constructed with a bottom and top part separate from the press beds and is adapted to be inserted successively into the heating press (10) and into the cooling press (12), and a conveyor means (34, 36, 38) for introducing the mould (28, 30) filled with raw plastics material into the heating press (10) for further conveyance thereof to the cooling press (12) after the completion of the melting operation and in order to convey the mould out of the cooling press (12), more particularly for performing the method according to claim 1, characterised in that the mould parts (28, 30) have a groove which surrounds the sealed edge required to be produced in the filter plate or the like, said groove being intended to receive an edge strip (52) of thermally insulating compressible material, such as wood, silicone, rubber or the like.

3. Apparatus according to claim 2, characterised in that the mould parts (28, 30) are provided with venting ducts (54) each extending as far as the narrow sides of the mould parts, from positions of material thickenings (46, 48) which are required to be produced.

## Revendications

1. Procédé de fabrication de plaques de filtres comprenant un rebord d'étanchéité et une région centrale plane, avec utilisation d'un granulé de matière thermoplastique ou équivalent, par moulage par compression, dans lequel on dispose, tout d'abord, dans l'empreinte d'un moule, composé d'une partie supérieure et d'une partie inférieure disposées horizontalement, ainsi que d'un cadre de moule de compression, un cadre noyau (46) préfabriqué, fait d'une matière thermoplastique passive et qui devra être incorporé par fusion superficielle sous l'effet de la fusion du granulé, ensuite, on remplit le reste de l'empreinte du moule de granulé ou équivalent, puis après avoir exercé une sollicitation de pression et avoir fermé le moule, on procède à une phase de fusion et, finalement, on refroidit tout en maintenant la sollicitation de pression, caractérisé par le fait que, pour assurer l'isolation thermique, on dispose dans le cadre du moule à compression, un encadrement périphérique (52) entourant le cadre de noyau (46), et fait d'une matière compressible isolante de la chaleur, telle que le bois, le silicone, le caoutchouc ou équivalent.

2. Installation pour la fabrication de plaques de filtres comprenant un rebord d'étanchéité et une région centrale plane, en matière thermoplastique ou équivalent, comprenant un moule en deux parties (28, 30) disposé sensiblement horizontalement et pouvant être chauffé et refroidi et dont la partie supérieure et la partie inférieure peuvent être rapprochées l'une de l'autre, avec sollicitation de pression, dans deux presses à plateaux multiples ou équivalents, qui présentent chacune des plateaux de presse supérieur et inférieur sensiblement plans ou équivalents, avec une pression de compression réglable, les plateaux (14, 16) de l'une (10) des presses pouvant être exclusivement chauffés et les plateaux (18, 20) de l'autre presse (12) pouvant être exclusivement refroidis, et le moule, qui comprend une partie inférieure et une partie supérieure, étant formé séparément des plateaux des presses et pouvant être introduit successivement dans la presse chauffante (10) et dans la presse de refroidissement (12), et un moyen de transport (34, 36, 38) destiné à introduire le moule (28, 30) rempli de la matière plastique de départ dans la presse chauffante (10) et pour le transporter ensuite dans la presse de refroidissement (12) après l'exécution de la phase de fusion et pour évacuer ce moule de la presse de refroidissement (12), en particulier pour la mise en œuvre du procédé selon la revendication 1, caractérisé par le fait que les demi-moules (28, 30) présentent une rainure entourant le rebord d'étanchéité de la plaque de filtre, ou équivalent, qu'il s'agit de fabriquer, et destinée à la mise en place d'un encadrement périphérique (52) fait d'une matière compressible et isolante de la chaleur, telle que le bois, le silicone, le caoutchouc ou équivalent.

3. Installation selon la revendication 2, caractérisée par le fait que les demi-moules (28, 30) sont munis de canaux de mise à l'air libre (54) qui s'étendent des points correspondants aux zones de matière renflées (46, 48) à fabriquer jusqu'aux côtés étroits des demi-moules.

0 083 715

FIG.1

FIG.2

FIG.3

FIG.4

FIG.5

FIG.6

FIG.7

FIG.8

FIG.9